# EUROPEAN PATENT APPLICATION

(11) **EP 4 570 140 A1**
(43) Date of publication of application: **18.06.2025**
(21) Application number: 24198195.0
(22) Date of filing: 03.09.2024
(51) Int. Cl.: A47J 31/00, A47J 43/00, B01F 35/88, G01G 19/52

(54) **EDIBLE LIQUID CONTAINER SYSTEM, REFRIGERATION DEVICE, AND LIQUID MEAL MAKER**

(30) Priority: 13.12.2023 CN 202311714428
(71) Applicant: Kalerm Technology (Suzhou) Co., Ltd, Suzhou Jiangsu 215134 (CN)
(72) Inventor: WANG, Qingli, Suzhou, Jiangsu, 215134 (CN); LU, Dean, Suzhou, Jiangsu, 215134 (CN); SHU, Hebo, Suzhou, Jiangsu, 215134 (CN)
(74) Representative: Winter, Brandl - Partnerschaft mbB

(57) **Abstract**

An edible liquid container system including an edible liquid container and a base. The edible liquid container includes an accommodation component and a first limiting structure, and the accommodation component is configured to accommodate edible liquid; the base includes a weighing module and a second limiting structure, and the weighing module is configured to obtain weight data; and the edible liquid container and the base achieve a limiting connection through a cooperation between the first limiting structure and the second limiting structure, and the limiting connection is configured to limit the edible liquid container at a preset position on the base and to allow the edible liquid container and the base to be out of contact. Based on the present application, liquid inside the edible liquid container can be weighed, and the cooperation between the first limiting structure and the second limiting structure facilitates positioning and can further bear an external force to a certain extent without causing the edible liquid container and the base to be out of contact. In addition, it is convenient for a user to remove and clean the edible liquid container alone, without affecting a weighing function of the base.

## Description

### TECHNICAL FIELD

The present application relates to the field of edible liquid container systems and liquid meal making technologies, and in particular, to an edible liquid container system, a refrigeration device, and a liquid meal maker.

### BACKGROUND

Edible liquid containers currently in use on the market are mainly designed to provide a container based on a mechanical structure, where this container is compatible with a corresponding liquid meal maker to accommodate edible liquid.

In actual use, a user needs to manually check a remaining level of edible liquid in an edible liquid container. In some cases, the edible liquid in the edible liquid container may be consumed very quickly. If the user does not monitor the level in time, the edible liquid may not be replenished in time, affecting normal use. For example, milk is served in the milk carton of a coffee machine, and the milk in the milk carton is reduced gradually in use. In this case, a user needs to manually check a remaining level of the milk. It is to be noted that an edible liquid container for storing edible liquid needs to be cleaned regularly with water or cleaning solutions, as required by food safety. However, an electronic component that can provide a weighing function is not suitable for being in contact with water or cleaning solutions.

Based on this, the present application provides an edible liquid container system, a refrigeration device, and a liquid meal maker, to improve the prior technology.

### SUMMARY

An objective of the present application is to provide an edible liquid container system, a refrigeration device, and a liquid meal maker. A user only needs to place an edible liquid container on a base to obtain weight data of liquid, which provides accurate information for the use of the liquid. In addition, the user can clean the edible liquid container alone, without affecting a weighing function.

The objective of the present application is achieved by using the following technical solutions:

In one aspect of the present application, an edible liquid container system is provided. The edible liquid container system including an edible liquid container and a base, the edible liquid container includes an accommodation component and a first limiting structure, and the accommodation component is configured to accommodate edible liquid;
the base includes a weighing module and a second limiting structure, and the weighing module is configured to obtain weight data; and
the edible liquid container and the base achieve a limiting connection through a cooperation between the first limiting structure and the second limiting structure, and the limiting connection is configured to limit the edible liquid container at a preset position on the base and to allow the edible liquid container and the base to be out of contact.

In another aspect of the present application, a refrigeration device is provided, and the refrigeration device includes one or more aforesaid edible liquid container systems.

In another aspect of the present application, a liquid meal maker is provided, and the liquid meal maker includes one or more aforesaid edible liquid container systems.

The present application provides the edible liquid container system, the refrigeration device, and the liquid meal maker. In the edible liquid container system, the design of the weighing module makes it easier to manage and use the weight data of the edible liquid. The user only needs to place the edible liquid container on the base to weigh the liquid inside the edible liquid container and further transmit the weight data to the liquid meal maker. The weight data can be used as a control parameter during liquid meal making. As the edible liquid container and the base are in a separate design, to improve the overall stability of the system and improve the resistance of the system to an external force, the first limiting structure and the second limiting structure are provided respectively on the edible liquid container and the base. When the edible liquid container is placed on the base, the edible liquid container is restricted at the preset position on the base due to the limiting function of the first limiting structure and the second limiting structure, which can not only facilitate positioning, but also bear an external force to a certain extent without causing the edible liquid container and the base to be out of contact. In addition, the separate design of the edible liquid container and the base is convenient for the user to remove and clean the edible liquid container alone, without affecting the weighing function of the base.

### BRIEF DESCRIPTION OF THE DRAWINGS

The following further describes the present application with reference to the accompanying drawings and specific implementations.
FIG. 1 is a three-dimensional view of an edible liquid container system according to an embodiment of the present application.
FIG. 2 is an exploded view of an edible liquid container according to an embodiment of the present application.
FIG. 3 is an exploded view of a base according to an embodiment of the present application.
FIG. 4 is a three-dimensional view of a supporting component according to an embodiment of the present application.
FIG. 5 is a three-dimensional view of an outer shell according to an embodiment of the present application.
FIG. 6 is a three-dimensional view of a supporting component according to an embodiment of the present application.
FIG. 7 is a three-dimensional view of a cooperation between a supporting component and an outer shell according to an embodiment of the present application.
FIG. 8 is a three-dimensional view of a first connector, a second connector, a weighing module, a connection line, a first weighing signal line, a second weighing signal line, and a first signal transmission line according to an embodiment of the present application.
FIG. 9 is a three-dimensional view of an accommodation component according to an embodiment of the present application.
FIG. 10 is an enlarged view of a dashed frame in FIG. 9.
FIG. 11 is a three-dimensional view of a supporting component from another angle according to an embodiment of the present application.
FIG. 12 is a cross-sectional diagram of an edible liquid container according to an embodiment of the present application.
FIG. 13 is an enlarged view of a dashed frame in FIG. 12.
FIG. 14 is a cross-sectional diagram of a supporting component, a weighing module, a first connector, and a second connector according to an embodiment of the present application.
FIG. 15 is a three-dimensional view of a weighing module according to an embodiment of the present application.
FIG. 16 is a three-dimensional view of a supporting component and a weighing module according to an embodiment of the present application.
FIG. 17 is a cross-sectional diagram of a supporting component, an outer shell, and a weighing module according to an embodiment of the present application.
FIG. 18 is a three-dimensional view of a first connector, a connection line, a temperature measurement module, a second signal transmission line, and a third signal transmission line according to an embodiment of the present application.
FIG. 19 is a cross-sectional diagram of a supporting component, a first connector, and a second sealing ring according to an embodiment of the present application.
FIG. 20 is an enlarged view of a dashed frame in FIG. 19.
FIG. 21 is a three-dimensional view of a weighing sensor, a second connector, a first weighing signal line, a second weighing signal line, and a first signal transmission line according to an embodiment of the present application.
FIG. 22 is a schematic view of a liquid meal maker according to an embodiment of the present application.
FIG. 23 is a schematic view of a refrigeration device according to an embodiment of the present application.

### DETAILED DESCRIPTION

The technical solutions in the embodiments of the present application are clearly and completely described in the following with reference to the accompanying drawings in the present application. Apparently, the described embodiments are merely some rather than all of the embodiments of the present application. All other embodiments obtained by a person skilled in the art based on the embodiments in the present application without creative efforts shall fall within the protection scope of the present application.

In the descriptions of the embodiments of the present application, it needs to be understood that the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more of the feature. In the descriptions of the embodiments of the present application, "plurality of" means two or more, unless otherwise definitely and specifically limited.

In modern catering and home kitchen environments, for example, during liquid meal making, accurate formulation of ingredients is very important. Particularly, accurate control of the amount of a liquid ingredient such as milk is essential to ensure food quality and taste. The design of milk cartons currently on the market focuses on a basic storage function and lacks intelligent elements to provide data of the milk amount in time. This results in a situation where control of the milk amount in liquid meal making, for example, in a coffee machine, an ice cream machine, or another device, relies on manual estimation or complex external measuring devices, reducing production efficiency and precision.

According to an aspect, the relevant milk cartons cannot provide the data of the milk amount, making it difficult for users to accurately know the remaining milk amount, which affects the efficiency and quality of liquid meal making. According to another aspect, due to the lack of data interaction with the liquid meal maker, the existing milk cartons limit the intelligent and automated potential of the liquid meal maker, making it difficult to automatically adjust the recipe and amount based on the data of the milk amount.

To improve the precision and efficiency of liquid meal making, by monitoring the amount of edible liquid, ingredients can be controlled more accurately for the liquid meal maker, thereby improving food quality and making consistency. In the prior art, the amount of edible liquid is monitored by using an electronic component that can provide a weighing function. It is to be noted that an edible liquid container for storing edible liquid needs to be cleaned regularly with water or cleaning solutions, as required by food safety. However, an electronic component that can provide a weighing function is not suitable for being in contact with water or cleaning solutions.
the present application provides an edible liquid container system, a refrigeration device, and a liquid meal maker, to improve the prior technology. The present application provides a solution of an intelligent edible liquid container system with liquid weight monitoring. Based on a separate design with a simple structure and low costs, combined with a limiting function provided by a limiting structure, this solution implements monitoring on the liquid weight while facilitating placing and removing an edible liquid container, and transmits weight data directly to a liquid meal maker. The weight data can be used as a control parameter during liquid meal making. For example, a parallel beam weighing sensor may be integrated into a base, and an electrical-signal switch structure may be used to ensure that weight data can be transmitted only when a matched edible liquid container is placed on the base. This design not only resolves the problem of the lack of liquid weight data (for example, data of the milk amount), but also provides necessary data support for the liquid meal maker to work more intelligently and automatically. In addition, the edible liquid container can be cleaned alone, which greatly facilitates cleaning by users without affecting the function of the weighing module.

It needs to be noted that, although the present application uses a scenario including a milk carton and a coffee machine as an example, the present application may also be applied to other scenarios of liquid meal making, such as various types of milk tea, mixed drinks, and cocktails. This is not restricted in the present application.

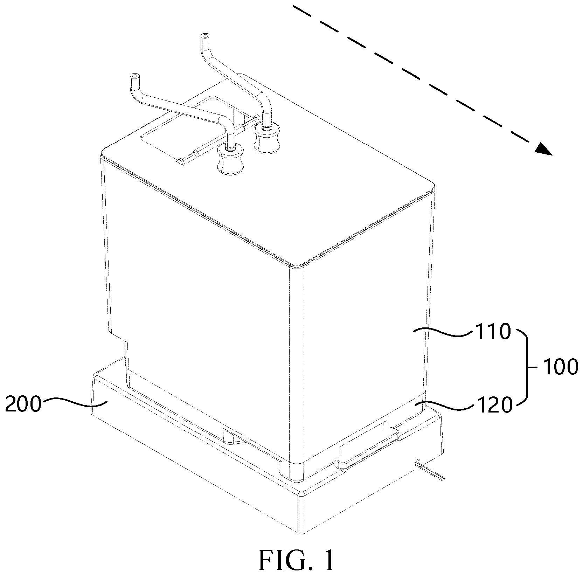

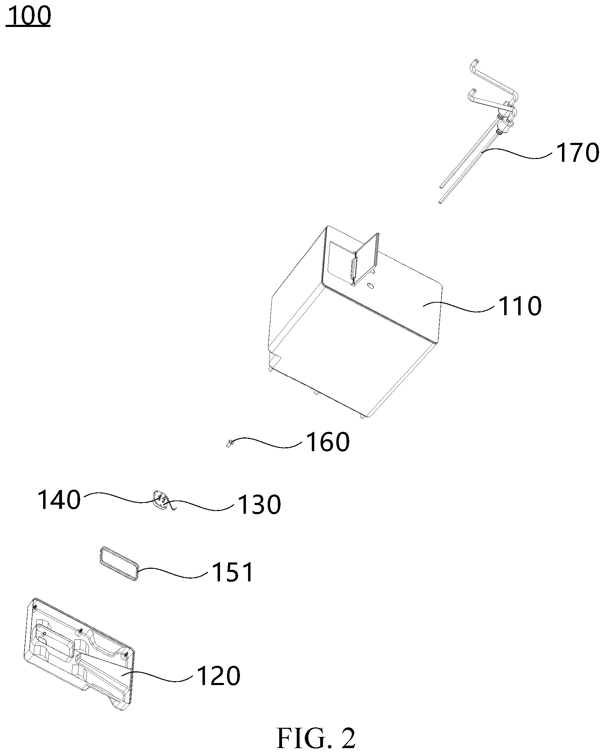

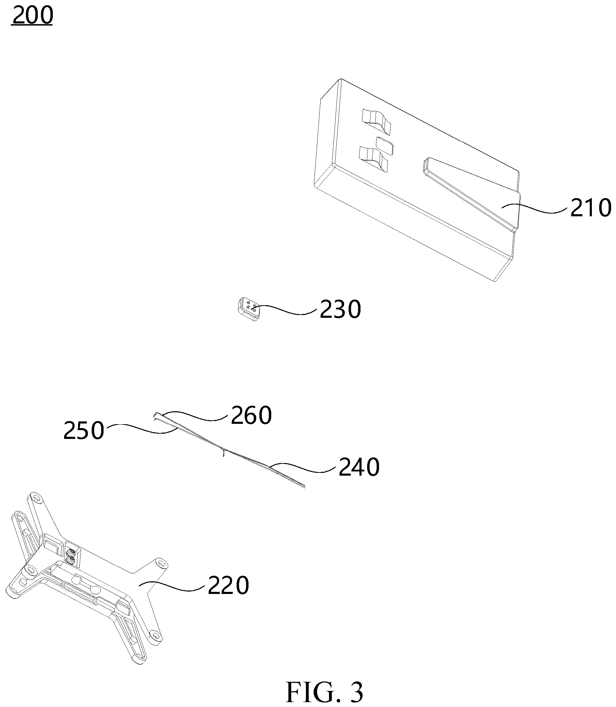

Refer to FIG. 1 to FIG. 3, FIG. 1 is a three-dimensional view of an edible liquid container system according to an embodiment of the present application. FIG. 2 is an exploded view of an edible liquid container 100 according to an embodiment of the present application. FIG. 3 is an exploded view of a base 200 according to an embodiment of the present application. The following figures illustrate various aspects of the edible liquid container system and its components.

As shown in FIG. 1, the present application provides an edible liquid container system, including an edible liquid container 100 and a base 200. As shown in FIG. 2, the edible liquid container 100 includes an accommodation component 110 and a first limiting structure, and the accommodation component 110 is configured to accommodate edible liquid. As shown in FIG. 3, the base 200 includes a weighing module 220 and a second limiting structure, and the weighing module 220 is configured to obtain weight data. The edible liquid container 100 and the base 200 achieve a limiting connection through a cooperation between the first limiting structure and the second limiting structure, and the limiting connection is configured to limit the edible liquid container 100 at a preset position on the base 200 and to allow the edible liquid container 100 and the base 200 to be out of contact.

A type of the edible liquid is not restricted in the embodiments of the present application, for example, may be a material for making a liquid meal, such as milk, coffee, tea, juice, water, or soup. For example, when the edible liquid is milk, the accommodation component 110 may be, for example, a milk carton.

In an embodiment of the present application, the preset position is a position predetermined on the base 200. For example, when the edible liquid container 100 is placed on the base 200, the edible liquid container 100 is restricted at the preset position.

The cooperation between the first limiting structure and the second limiting structure is not restricted in the embodiments of the present application. The cooperation between the first limiting structure and the second limiting structure may include one or more of a magnetic attraction, a snap-fit, and a hook and loop cooperation.

For example, when the magnetic attraction is adopted, the first limiting structure and the second limiting structure are magnetic components that attract each other. For example, when the snap-fit is adopted, the first limiting structure and the second limiting structure are clamping components with corresponding positions and matching shapes. For example, when the hook and loop cooperation is adopted, the first limiting structure and the second limiting structure are matching hook and loop components.

With reference to FIG. 1 and FIG. 3, the edible liquid container 100 is always placed on the base 200 during use. In this case, the weighing module 220 provides the weight data to an external device, for example, a liquid meal maker. In some embodiments, the weight data may include, for example, one or more of an increased liquid weight, a remaining liquid weight, and a used liquid weight.

Through software settings, the weighing module 220 may provide a one-time used liquid weight to the liquid meal maker as a reference for the liquid meal maker to control the liquid amount, which facilitates the liquid meal maker to control a liquid proportioning pump in a suction module 170.

In some embodiments, the edible liquid container system may be independently placed adjacent to the liquid meal maker, a communication connection between the edible liquid container system and the liquid meal maker is established in a wireless or wired communication manner, and the edible liquid container system works directly as an independent module. In some other embodiments, the edible liquid container system may be a part built in a refrigeration device (such as a refrigerator or a freezer) or another device that works in conjunction with the liquid meal maker.

In the edible liquid container system, the design of the base 200 and the edible liquid container 100 makes it easier to manage and use the edible liquid. A user only needs to place the edible liquid container 100 on the base 200, so that the system can obtain the weight data of the liquid in time, which provides accurate information for the use of the liquid. By providing the weight data, the weighing module 220 can provide an accurate used liquid weight for the liquid meal maker to control the liquid proportioning pump more accurately, thereby improving the quality and consistency of a liquid meal. The system may be placed adjacent to the liquid meal maker for use as an independent module, or may be built in another device as a part, so that the system is suitable for different application scenarios. As the edible liquid container 100 and the base 200 are in a separate design, to improve the overall stability of the system and improve the resistance of the system to an external force, the first limiting structure and the second limiting structure are provided respectively on the edible liquid container 100 and the base 200. When the edible liquid container 100 is placed on the base 200, the edible liquid container 100 is limited at the preset position on the base 200 due to the limiting function of the first limiting structure and the second limiting structure, which can not only facilitate positioning, but also bear an external force to a certain extent without causing the edible liquid container 100 and the base 200 to be out of contact. In addition, the separate design of the edible liquid container 100 and the base 200 is convenient for the user to remove and clean the edible liquid container 100 alone, and requires no additional operation such as disassembly by the user, without affecting the weighing function of the base 200.

As shown in FIG. 2, the accommodation component 110 may be of an integrated design, or the accommodation component 110 may include an upper cover and an accommodation structure that are in a separate design. In some embodiments, the accommodation component 110 may be, for example, provided with an opening for liquid pouring. To reduce dust and impurities that enter the accommodation component 110, a baffle may be disposed at the opening. The baffle and the accommodation component 110 may be, for example, hinged, to facilitate opening and closing the baffle for the purpose of liquid pouring.

The design of the opening of the accommodation component 110 allows the user to pour the liquid easily, which facilitates regular addition or replacement of the liquid, particularly suitable for use in the catering industry or other scenarios that require frequent operations. By installing the baffle, it can effectively prevent external substances such as dust and impurities from entering the accommodation component 110, thereby maintaining the hygiene and quality of the edible liquid. The hinge design between the baffle and the accommodation component 110 makes it easy to open and close the baffle, so that the user can easily perform an operation of pouring liquid.

In some embodiments, with reference to FIG. 1, FIG. 2, and FIG. 3, the edible liquid container 100 further includes a supporting component 120, the supporting component 120 is disposed between the accommodation component 110 and the base 200, and the first limiting structure is provided at the bottom of the supporting component 120; and the base 200 further includes an outer shell 210, the outer shell 210 is disposed between the supporting component 120 and the weighing module 220, and the second limiting structure is provided at the top of the outer shell 210.

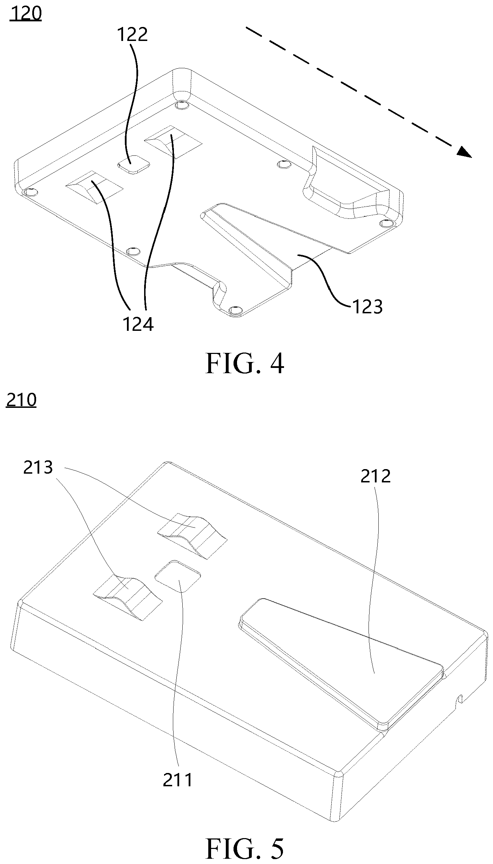

Refer to FIG. 4 and FIG. 5. FIG. 4 is a three-dimensional view of a supporting component 120 according to an embodiment of the present application. FIG. 5 is a three-dimensional view of an outer shell 210 according to an embodiment of the present application.

The structure design of the first limiting structure and the second limiting structure is not restricted in the embodiments of the present application. In some embodiments, with reference to FIG. 4 and FIG. 5, the first limiting structure includes a limiting concave portion 123 that is opened downward; and the second limiting structure includes a limiting convex portion 212 that protrudes upward, and the limiting convex portion 212 is complementary to the limiting concave portion 123. In some other embodiments, the first limiting structure includes a convex portion that protrudes downward; and the second limiting structure includes a concave portion that is opened upward and that is complementary to the convex portion.

The quantities of limiting concave portions 123 and corresponding limiting convex portions 212 are not restricted in the embodiments of the present application, for example, may be one or more.

The shape of the limiting concave portion 123 is not restricted in the embodiments of the present application, for example, may be a column, a cone shape, a solid of revolution, a truncated solid, or an irregular shape. The column includes a cylinder and a prism. The cone shape includes a cone and a pyramid. The solid of revolution includes a cylinder, a truncated cone, a cone, a sphere, an ellipsoid, a spherical cap, a segmental ring, a circular ring, a dam ring, an annular sector, a jujube pit shape, and the like. The truncated solid includes a truncated pyramid, a truncated cone, an obliquely truncated cylinder, an obliquely truncated prism, an obliquely truncated cone, a spherical cap, a segment, and the like.

As shown in FIG. 4, in some embodiments, a width of the limiting concave portion 123 gradually increases along a first direction, to facilitate the placement of the edible liquid container 100 at the preset position on the base 200 along the first direction.

Wherein a cross-section of the supporting component 120 may be, for example, of an approximately rectangular shape, and the first direction may be, for example, a length direction of the supporting component 120. In some embodiments, the limiting concave portion 123 may extend all the way to the edge of the supporting component 120 to form a flared opening, as shown in FIG. 4.

As shown in FIG. 4 and FIG. 5, the limiting concave portion 123 that is opened downward is provided on the bottom portion of the supporting component 120, and the limiting convex portion 212 that protrudes upward is provided on the outer shell 210, which facilitates quick and accurate placement of the edible liquid container 100 at the preset position on the base 200, and also facilitates removal of the edible liquid container 100 from the base 200 for cleaning. The user can easily place the edible liquid container 100 on the base 200 or remove the edible liquid container 100 from the base 200 for cleaning or replacement, without complex disassembly operations. As the weighing module 220 is a part of the base 200, and the edible liquid container 100 and the base 200 are in a separable design, the weighing module 220 and the edible liquid container 100 are designed to be separate, which significantly facilitates separate cleaning of the edible liquid container 100 without affecting the normal weighing function, particularly suitable for scenarios that require frequent cleaning of the edible liquid container 100, for example, a liquid meal making scenario.

With reference to FIG. 4 and FIG. 5, in some embodiments, one or more first fool-proofing structures 124 are provided at the bottom of the supporting component 120, one or more second fool-proofing structures 213 are provided on the outer shell 210, the first fool-proofing structures 124 correspond one-to-one the second fool-proofing structures 213, and the edible liquid container 100 and the base 200 achieve a fool-proofing connection through a cooperation between the first fool-proofing structures 124 and the second fool-proofing structures 213.

The structure design of the first fool-proofing structure 124 and the second fool-proofing structure 213 is not restricted in the embodiments of the present application, for example, may be a concave portion and a convex portion that match each other, or magnetic components that attract each other, or matching hook and loop components.

In some embodiments, referring to FIG. 4 and FIG. 5, the first fool-proofing structure 124 is constructed as a concave portion, the second fool-proofing structure 213 is constructed as a convex portion, and the first fool-proofing structure 124 may provide clearance for assembly of the second fool-proofing structure 213.

The number of first fool-proofing structures 124 and corresponding second fool-proofing structures 213 are not restricted in the embodiments of the present application, for example, may be 1, 2, 3, 4, or the like. The shape of the first fool-proofing structure 124 is not restricted in the embodiments of the present application, for example, may be a column, a cone shape, a solid of revolution, a truncated solid, or an irregular shape. The column includes a cylinder and a prism. The cone shape includes a cone and a pyramid. The solid of revolution includes a cylinder, a truncated cone, a cone, a sphere, an ellipsoid, a spherical cap, a segmental ring, a circular ring, a dam ring, an annular sector, a jujube pit shape, and the like. The truncated solid includes a truncated pyramid, a truncated cone, an obliquely truncated cylinder, an obliquely truncated prism, an obliquely truncated cone, a spherical cap, a segment, and the like.

In some embodiments, the shape of the first fool-proofing structure 124 is a semi-cylinder or an approximate semi-cylinder.

The fool-proofing connection is achieved through the cooperation between the first fool-proofing structure 124 and the second fool-proofing structure 213, which ensures that the edible liquid container 100 is mounted on the base 200 in a proper manner, preventing misoperations and incorrect mounting.

Therefore, the edible liquid container 100 and the base 200 can achieve quick placement through the cooperation between the first fool-proofing structure 124 and the second fool-proofing structure 213, as well as the cooperation between the first limiting structure and the second limiting structure, and the edible liquid container 100 can be removed easily from the base 200 for cleaning, which provides simple and easy-to-operate steps of disassembly and mounting. The limiting connection and the fool-proofing connection allow the user to easily maintain and clean the edible liquid container 100, and ensure that the edible liquid container 100 is placed at the proper position.

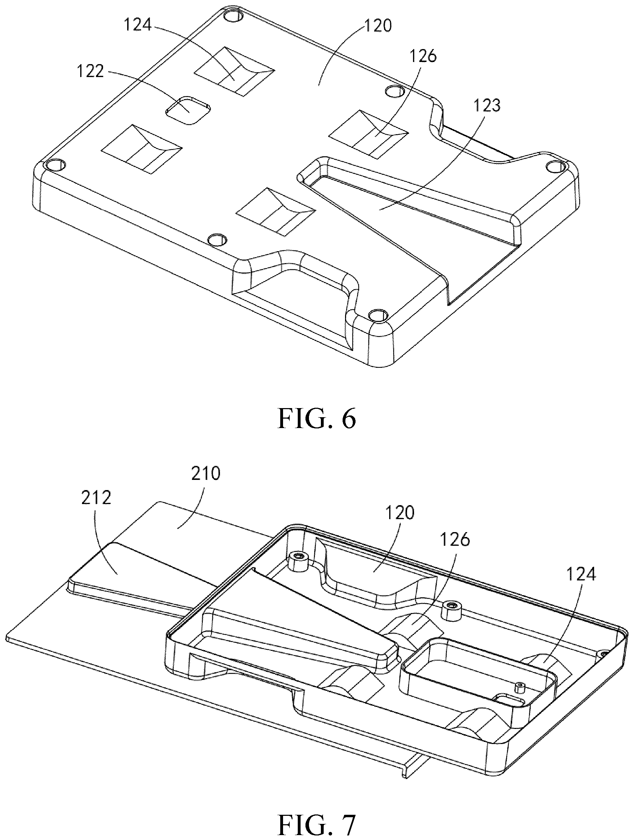

With reference to FIG. 5 to FIG. 7, in some embodiments, a third fool-proofing structure 126 is further provided at the bottom of the supporting component 120, and the third fool-proofing structure 126 is configured to cooperate with the second fool-proofing structure 213 to achieve limitation. The specific configuration of the third fool-proofing structure 126 may be the same as that of the first fool-proofing structure 124. For example, the third fool-proofing structure 126 can be a concave portion, corresponding to a convex second fool-proofing structure 213. The edible liquid container 100 has a working position for the limiting connection with the base 200 and a disassembly position for being out of contact with the base 200. As illustrated in FIG. 1, the edible liquid container 100 is at the working position. When the first limiting structure and the second limiting structure are completely separate, the edible liquid container 100 is at the disassembly position. Along a separation path of the edible liquid container 100 and the base 200, through the limiting cooperation between the second fool-proofing structure 213 and the third fool-proofing structure 126, the edible liquid container 100 is maintained between the working position and the disassembly position. The separation path may be, for example, the reverse direction of the first direction in FIG. 1. FIG. 7 shows relative positions of the supporting component 120 and the outer shell 210 of the base 200 when the edible liquid container 100 is pulled out by about half the distance.

When the edible liquid container system is used with a refrigeration device, especially when the edible liquid container 100 is disposed inside the refrigeration device, if milk needs to be added, the edible liquid container 100 is pulled out halfway. At this position, the user can open the baffle and add milk into the accommodation component 110, without completely pulling the edible liquid container 100 out of the refrigeration device, which is convenient for the user. The supporting component 120 can be restricted through the limiting cooperation between the second fool-proofing structure 213 and the third fool-proofing structure 126, to position the relative positions of the edible liquid container 100 and the base 200. Certainly, the distance by which the edible liquid container 100 is pulled out is not restricted, as long as a part or all of the opening of the accommodation component 110 can be exposed.

In addition, the second fool-proofing structure 213 can cooperate with the first fool-proofing structure 124 to achieve the fool-proofing connection, and the second fool-proofing structure 213 can also cooperate with the third fool-proofing structure 126 to achieve positional limitation. This can simplify the structure of the edible liquid container system to facilitate manufacturing.

The communication manner between the weighing module 220 and an external device (for example, a liquid meal maker) is not restricted in the embodiments of the present application, which may be a wireless communication manner or a wired communication manner.

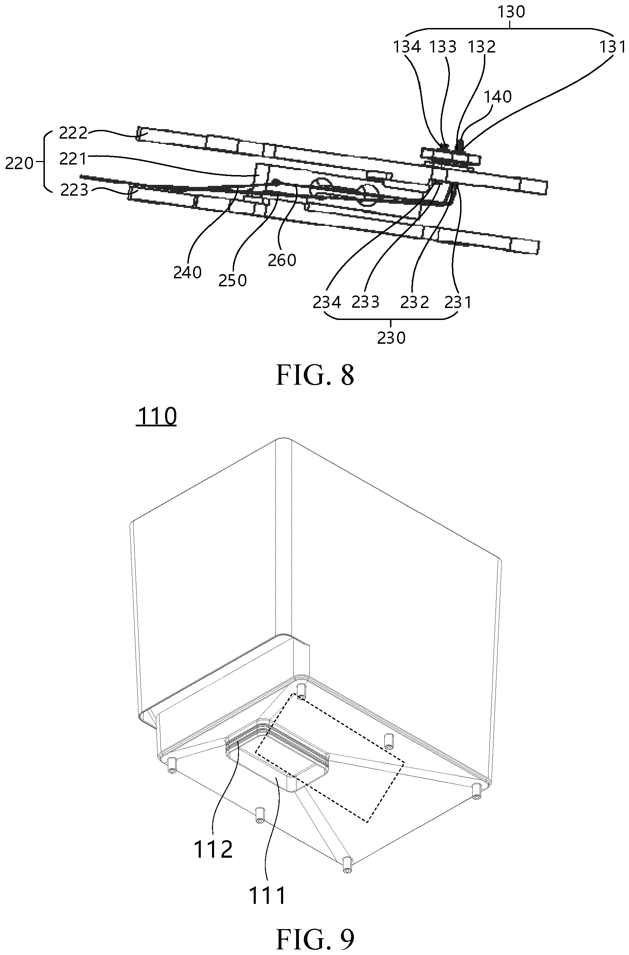

As shown in FIG. 8, it is a three-dimensional view of a first connector 130, a second connector 230, a weighing module 220, a connection line 140, a first weighing signal line 240, a second weighing signal line 250, and a first signal transmission line 260 according to an embodiment of the present application.

In some embodiments, the edible liquid container 100 further includes a first connector 130, the base 200 further includes a second connector 230, and after the edible liquid container 100 is placed on the base 200, the first connector 130 is configured to connect to the second connector 230 to activate a first communication circuit, and the first communication circuit is configured to transmit the weight data obtained by the weighing module 220.

In some embodiments, the first connector 130 includes a first connection component 131 and a second connection component 132, and the second connector 230 includes a third connection component 231 and a fourth connection component 232; the edible liquid container 100 further includes a connection line 140, and the connection line 140 is configured to connect the first connection component 131 and the second connection component 132; and the base 200 further includes a first weighing signal line 240, a second weighing signal line 250, and a first signal transmission line 260, the first weighing signal line 240 is configured to connect the weighing module 220 and an external device (not shown in the figure), the first signal transmission line 260 is configured to connect the weighing module 220 and the third connection component 231, and the second weighing signal line 250 is configured to connect the fourth connection component 232 and the external device; and when the third connection component 231 is electrically connected to the first connection component 131 and the fourth connection component 232 is electrically connected to the second connection component 132, the first connector 130 and the second connector 230 are electrically connected to activate the first communication circuit.

The design of the first connection component 131 and the second connection component 132, as well as design of the third connection component 231 and the fourth connection component 232 make the connection and disconnection more controllable and reliable, and ensure that the first connector 130 and the second connector 230 can be electrically connected stably when the edible liquid container 100 is placed on the base 200, facilitating the transmission of to transmit the weight data. Specifically, when the third connection component 231 is electrically connected to the first connection component 131 and the fourth connection component 232 is electrically connected to the second connection component 132, the first connector 130 and the second connector 230 are electrically connected, thereby enabling the first communication circuit, which ensures that the first communication circuit can be established only when the edible liquid container 100 is properly aligned with the base 200, to achieve transmission and monitoring of the weight data.

In addition, the second connector 230 protrudes from an upper surface of the outer shell 210 to be electrically connected to the first connector 130 to activate the circuit. The second fool-proofing structure 213 is also provided to protrude from the upper surface of the outer shell 210, a height by which the second fool-proofing structure 213 protrudes is greater than a height by which the second connector 230 protrudes, and the second fool-proofing structure 213 is provided adjacent to the second connector 230, which can prevent wear and tear of the second connector 230 by the supporting component 120 during assembly or disassembly. In some embodiments, the third connection component 231 and the fourth connection component 232 protrude from the upper surface of the outer shell 210, and the height by which the second fool-proofing structure 213 protrudes is greater than a height by which the third connection component 231 protrudes and is also greater than a height by which the fourth connection component 232 protrudes, which can prevent wear and tear of the third connection component 231 and the fourth connection component 232 by the supporting component 120 during assembly or disassembly.

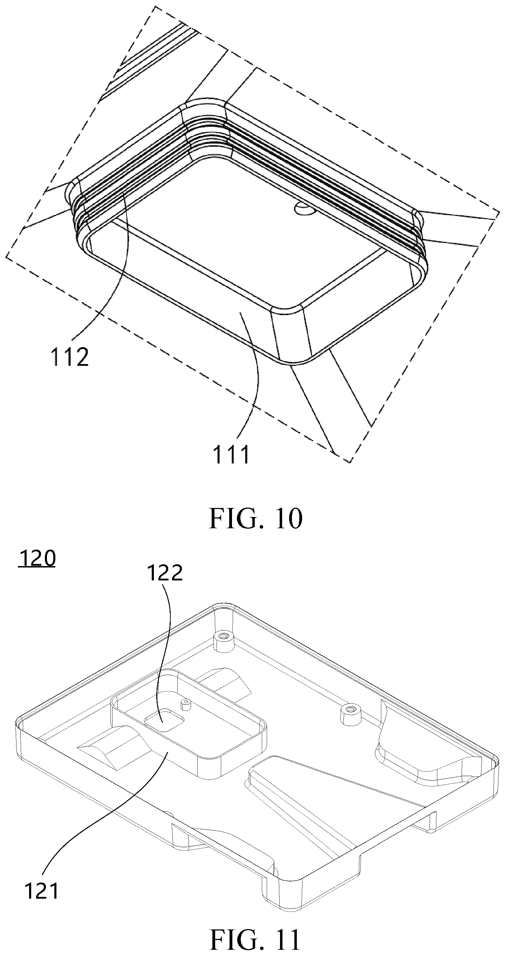

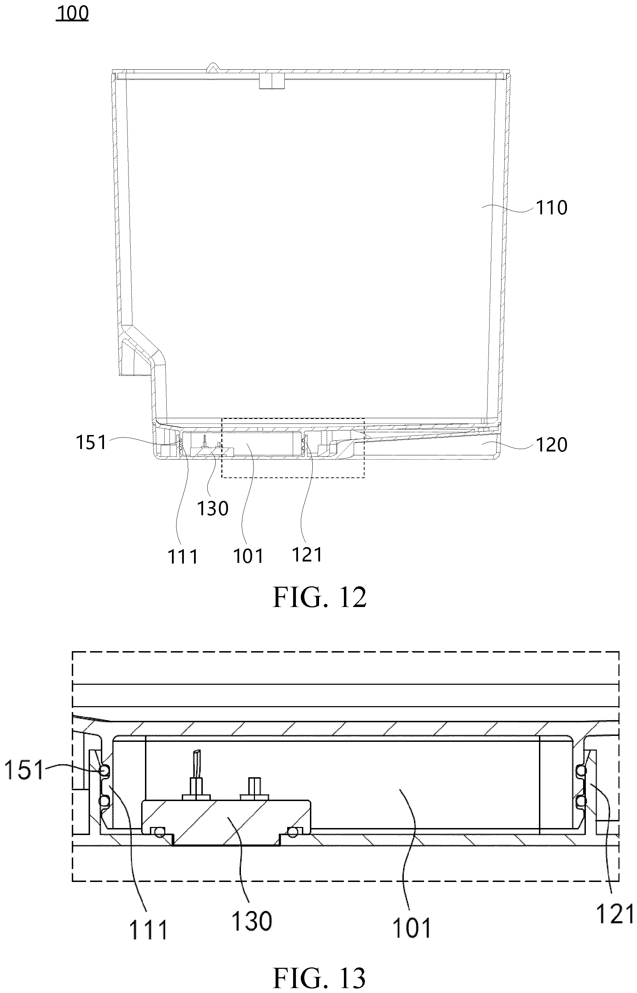

Refer to FIG. 9 to FIG. 13. FIG. 9 is a three-dimensional view of an accommodation component 110 according to an embodiment of the present application. FIG. 11 is a three-dimensional view of a supporting component 120 from another angle according to an embodiment of the present application. FIG. 12 is a three-dimensional view of an accommodation component 110, a supporting component 120, a first connector 130, and a first sealing ring 151 according to an embodiment of the present application.

In some embodiments, as shown in FIG. 9 and FIG. 10, a first convex portion 111 that protrudes downward is provided on a bottom portion of the accommodation component 110, as shown in FIG. 11, a second convex portion 121 that protrudes upward is provided on the supporting component 120, and as shown in FIG. 12 and FIG. 13, the second convex portion 121 forms a first accommodation space 101, and the first accommodation space 101 surrounds the first convex portion 111 in a circumferential direction; and at least a part of the first connector 130 is accommodated in the first accommodation space 101.

Wherein that at least a part of the first connector 130 is accommodated in the first accommodation space 101 includes two cases. In the first case, all of the structure of the first connector 130 is accommodated in the first accommodation space 101, for example, the first connector 130 is a female connector. In the second case, one part of the structure of the first connector 130 is accommodated in the first accommodation space 101, and the other part of the structure extends downward and out of the first accommodation space 101, for example, the first connector 130 is a male connector.

The introduction of the supporting component 120 in the edible liquid container system effectively fixes the distance and position between the accommodation component 110 and the base 200, which helps maintain the stability and reliability of the whole system. The design of the first convex portion 111 on the bottom portion of the accommodation component 110 and the second convex portion 121 on the supporting component 120 can form the first accommodation space 101. At least a part of the first connector 130 may be accommodated in the first accommodation space 101, which provides a compact and secure way to accommodate the first connector 130, preventing the first connector 130 from external interference or damage.

The shapes of the first convex portion 111 and the second convex portion 121 are not restricted in the embodiments of the present application, for example, may be square, round, trapezoidal, triangular, rhombic, or an irregular shape. The shapes of the first convex portion 111 and the second convex portion 121 are not restricted. Appropriate shapes may be selected according to specific design requirements to ensure effective mutual cooperating and enclosure, to form the stable first accommodation space 101.

In some embodiments, as shown in FIG. 9 and FIG. 10, one or more first ring grooves 112 are provided on an outer wall of the first convex portion 111 in the circumferential direction; and with reference to FIG. 9 and FIG. 13, the edible liquid container 100 further includes one or more first sealing rings 151, the first sealing rings 151 are disposed between the first convex portion 111 and the second convex portion 121, with each first sealing ring 151 being sleeved onto a corresponding first ring groove 112.

The quantity of first ring grooves 112 is not restricted in the embodiments of the present application, for example, may be 1, 2, 3, 4, 5, or the like. Correspondingly, the quantity of first sealing rings 151 may be, for example, 1, 2, 3, 4, 5, or the like.

The first ring grooves 112 are provided on the outer wall of the first convex portion 111 in the circumferential direction, and the first sealing ring 151 is sleeved on the first ring groove 112, which can effectively improve the sealing performance between the accommodation component 110 and the supporting component 120, ensuring that water does not leak from between the first convex portion 111 and the second convex portion 121 or does not enter the first accommodation space 101 during cleaning. As required, one or more first ring grooves 112 may be selected and provided with corresponding first sealing rings 151, to improve the sealing performance.

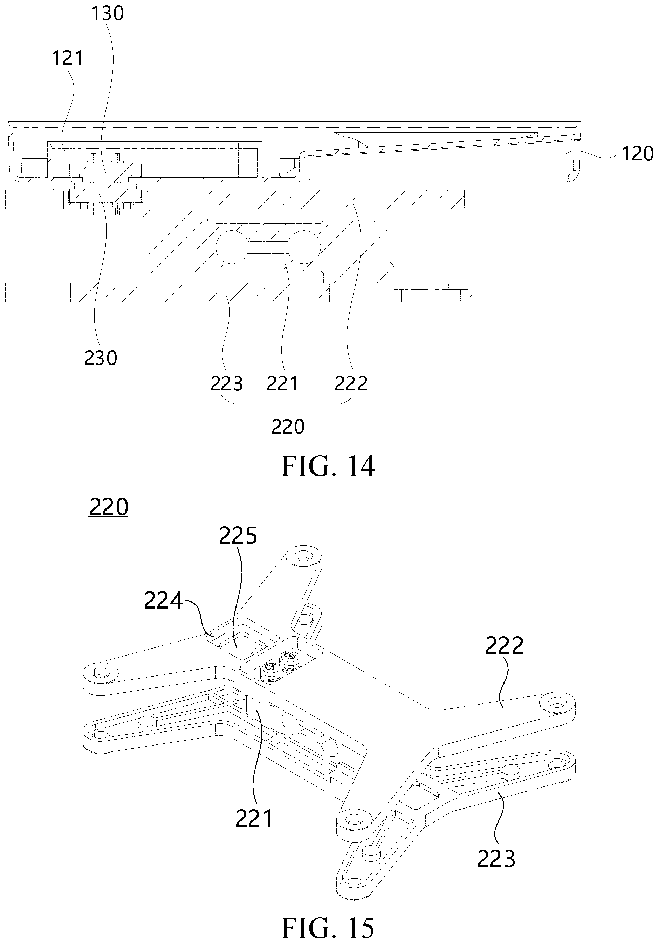

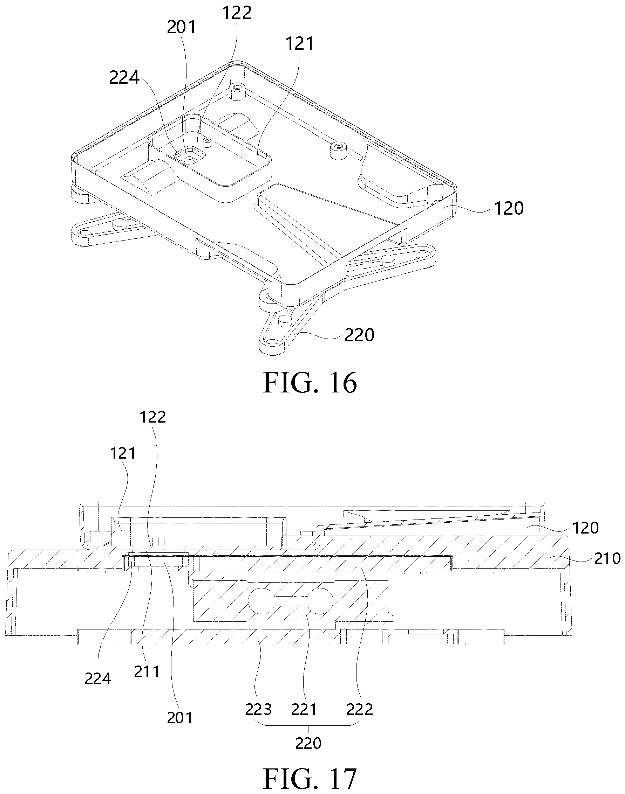

Refer to FIG. 14 to FIG. 16, FIG. 14 is a cross-sectional diagram of a supporting component 120, a weighing module 220, a first connector 130, and a second connector 230 according to an embodiment of the present application. FIG. 15 is a three-dimensional view of a weighing module 220 according to an embodiment of the present application. FIG. 16 is a three-dimensional view of a supporting component 120 and a weighing module 220 according to an embodiment of the present application.

In some embodiments, with reference to FIG. 4 and FIG. 14, a first through hole 122 is provided inside the second convex portion 121 of the supporting component 120, and the first through hole 122 corresponds to a position of the first connector 130. With reference to FIG. 14 and FIG. 15, a first recess 224 that is opened upward is provided on the weighing module 220, and the first recess 224 corresponds to a position of the first through hole 122. With reference to FIG. 15 and FIG. 16, a second through hole 225 that corresponds to a position of the second connector 230 is provided inside the first recess 224, the first recess 224 is provided to form second accommodation space 201, and at least a part of the second connector 230 is accommodated in the second accommodation space 201.

Wherein that at least a part of the second connector 230 is accommodated in the second accommodation space 201 includes two cases. In the first case, all of the structure of the second connector 230 is accommodated in the second accommodation space 201. In the second case, one part of the structure of the second connector 230 is accommodated in the second accommodation space 201, and the other part of the structure extends upward and/or downward and protrudes out of the second accommodation space 201, as shown in FIG. 14.

Refer to FIG. 17. FIG. 17 is a cross-sectional diagram of a supporting component 120, an outer shell 210, and a weighing module 220 according to an embodiment of the present application.

In some embodiments, as shown in FIG. 17, a third through hole 211 corresponding to the position of the first through hole 122 is provided on the outer shell 210, and the third through hole 211 and the first recess 224 are provided to form the second accommodation space 201.

The first through hole 122 is provided inside the second convex portion 121 of the supporting component 120, and the first recess 224 corresponding to the position of the first through hole 122 is provided on the weighing module 220, so that a mutual correspondence between the first through hole 122 and the first recess 224 can be achieved, to form the second accommodation space 201 to accommodate at least a part of the second connector 230. The outer shell 210 is positioned between the supporting component 120 and the weighing module 220, and the third through hole 211 corresponding to the position of the first through hole 122 is provided on the outer shell 210. The third through hole 211, in conjunction with the first recess 224, contributes to the formation of the second accommodation space 201, which further ensures stable accommodation and sealing of the second connector 230.

As shown in FIG. 8, the weighing module 220 may include a weighing sensor 221, an upper support 222, and a lower support 223. The weighing sensor 221 is configured to obtain weight data. The upper support 222 is disposed between the outer shell 210 and the weighing sensor 221. The lower support 223 is disposed under the weighing sensor 221.

The weighing sensor 221 in the weighing module 220 is not restricted in the embodiments of the present application, for example, may be a parallel beam weighing sensor. For example, the weighing module 220 includes the parallel beam weighing sensor. Deformation data from the parallel beam weighing sensor is converted to a remaining liquid weight, and calculation may be further performed to obtain other weight data.

In some embodiments, with reference to FIG. 2 and FIG. 3, the edible liquid container 100 further includes a temperature measurement module 160, and the temperature measurement module 160 is configured to obtain temperature data; and after the edible liquid container 100 is placed on the base 200, the first connector 130 is further configured to connect to the second connector 230 to activate a second communication circuit, and the second communication circuit is configured to transmit the temperature data.

In some embodiments, the temperature measurement module 160 includes a temperature sensor. The temperature sensor is not restricted in the embodiments of the present application, for example, may be an NTC temperature probe.

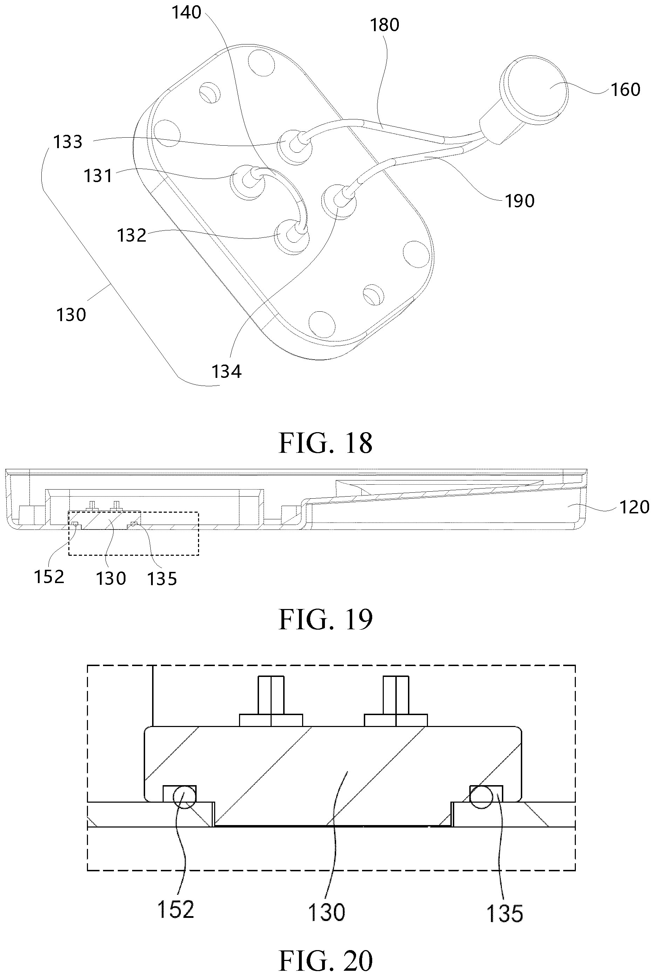

Refer to FIG. 18. FIG. 18 is a three-dimensional view of a first connector 130, a connection line 140, a temperature measurement module 160, a second signal transmission line 180, and a third signal transmission line 190 according to an embodiment of the present application.

In some embodiments, the first connector 130 further includes a fifth connection component 133 and a sixth connection component 134, and the edible liquid container 100 further includes the second signal transmission line 180 and the third signal transmission line 190. The fifth connection component 133 is electrically connected to a first connection end of the temperature measurement module 160 by using the second signal transmission line 180. The sixth connection component 134 is electrically connected to a second connection end of the temperature measurement module 160 by using the third signal transmission line 190. With reference to FIG. 8, the second connector 230 further includes a seventh connection component 233 and an eighth connection component 234. The base 200 further includes a first temperature signal line (not shown in the figure) and a second temperature signal line (not shown in the figure). The first temperature signal line is configured to connect the seventh connection component 233 and an external device. The second temperature signal line is configured to connect the eighth connection component 234 and the external device.

In some embodiments, the seventh connection component 233 and the eighth connection component 234 protrude from the upper surface of the outer shell 210, and the the second fool-proofing structure 213 protrudes higher than both the seventh connection component 233 and the eighth connection component 234, preventing wear and tear of the seventh connection component 233 and the eighth connection component 234 by the supporting component 120 during assembly or disassembly.

After the edible liquid container 100 is placed on the base 200, the third connection component 231 and the first connection component 131 are electrically connected, the fourth connection component 232 and the second connection component 132 are electrically connected, the seventh connection component 233 and the fifth connection component 133 are electrically connected, and the eighth connection component 234 and the sixth connection component 134 are electrically connected, so that the first connector 130 and the second connector 230 are electrically connected to activate the first communication circuit between the weighing module 220 and the external device and activate the second communication circuit between the temperature measurement module 160 and the external device. The first communication circuit is configured to transmit weight data obtained by the weighing module 220 to the external device. The second communication circuit is configured to transmit temperature data obtained by the temperature measurement module 160 to the external device.

Wherein circuit elements involved in the first communication circuit include: the first weighing signal line 240, the weighing module 220, the first signal transmission line 260, the third connection component 231, the first connection component 131, the connection line 140, the second connection component 132, the fourth connection component 232, and the second weighing signal line 250. Circuit elements involved in the second communication circuit include: the first temperature signal line, the seventh connection component 233, the fifth connection component 133, the second signal transmission line 180, the temperature measurement module 160, the third signal transmission line 190, the sixth connection component 134, the eighth connection component 234, and the second temperature signal line.

In this case, the temperature measurement module 160 in the edible liquid container 100 and the weighing module 220 in the base 200 may share the first connector 130 and the second connector 230, to transmit temperature data obtained by the temperature measurement module 160 and weight data obtained by the weighing module 220 to an external device, for example, a liquid meal maker.

The connected first connector 130 and second connector 230 may be used as electrical-signal switch structures. Specifically, the electrical-signal switch structures are disposed respectively on the edible liquid container 100 and the base 200, so that the base 200 is suitable only for the corresponding edible liquid container 100. Only when the matched edible liquid container 100 is placed on the base 200, the electrical-signal switch structures can be electrically connected, so that the weight data of the weighing module 220 and the temperature data of the temperature measurement module 160 can be transmitted.

The temperature measurement module 160 is integrated into the edible liquid container 100, the weighing module 220 is integrated into the base 200, and the first connector 130 and the second connector 230 are shared, so that the function of transmitting weight data and temperature data at the same time is achieved, which facilitates the liquid meal maker or another external device to obtain the weight data and the temperature data at the same time. The employment of the electrical-signal switch structures ensures that electrical connectivity is established solely when the compatible edible liquid container 100 is positioned on the base 200, so that the misuse of a mismatched container is prevented, thereby improving the safety and controllability of the system. The edible liquid container system can monitor the weight and temperature at the same time, which facilitates the user to know the weight and temperature of the liquid in time.

The connection manner of the first connector 130 and the second connector 230 is not restricted in the embodiments of the present application, for example, may be a pogo pin connection, a magnetic connection, a plug-in connection, etc. In some embodiments, the first to fourth connection component are pogo pin connectors or board-to-board connectors. In some embodiments, the first to eighth connection component are pogo pin connectors or board-to-board connectors.

For example, as shown in FIG. 8, the first to eighth connection component are all pogo pin connectors, each connecting component (the first connection component 131, the second connection component 132, the fifth connection component 133, and the sixth connection component 134) of the first connector 130 is female pogo pin connectors, and each connecting component (the third connection component 231, the fourth connection component 232, the seventh connection component 233, and the eighth connection component 234) of the second connector 230 is corresponding male pogo pin connectors.

In an embodiment of the present application, the connection manner of the first connector 130 and the second connector 230 may include a plurality of connection manners, and a pogo pin connector or a board-to-board connector may be used. During actual application, an appropriate connection manner and an appropriate connector type may be selected according to a specific design requirement and application scenario. When each connection component is a pogo pin connector, the connection components of the first connector 130 and the connection components of the second connector 230 may be corresponding female and male pogo pin connectors respectively, making the assembly and replacement of the first connector 130 and the second connector 230 more convenient. In addition, if some connection components need to be replaced, only corresponding female or male pogo pin connectors need to be replaced, instead of replacing the entire connector system.

Refer to FIG. 19, FIG. 19 is a cross-sectional diagram of the supporting component 120, the first connector 130, and a second sealing ring 152 according to an embodiment of the present application.

In some embodiments, as shown in FIG. 17, a second ring groove 135 is provided on a bottom portion of the first connector 130, the edible liquid container 100 further includes the second sealing ring 152, and the second sealing ring 152 is disposed between the first connector 130 and the supporting component 120 and is mounted on the second ring groove 135.

When the edible liquid container 100 needs to be cleaned, the edible liquid container 100 is directly removed and normally cleaned. The sealing structures such as the first sealing ring 151 and the second sealing ring 152 are disposed on the edible liquid container 100, which can prevent water from entering the first accommodation space 101, so that the weighing function cannot be affected after the cleaned edible liquid container 100 is put back on the base 200. Specifically, since the edible liquid container 100 and the base 200 are independent structures, each equipped with sealing structures, the edible liquid container 100 can be directly removed and cleaned without affecting the weighing function of the base 200, simplifying the process of maintenance and cleaning.

As shown in FIG. 2, in some embodiments, the edible liquid container 100 further includes one or more suction modules 170 for suctioning edible liquid from the accommodation component 110.

The number of suction modules 170 is not restricted in the embodiments of the present application, for example, may be 1, 2, 3, 4, 5, 6, or the like.

In some embodiments, the accommodation component 110 may be, for example, provided with a suction through hole corresponding to each suction module 170.

By means of the suction modules 170, the function of suctioning edible liquid from the accommodation component 110 can be achieved, which allows the edible liquid to be suctioned and used accurately. In addition, the user may select the quantity of suction modules 170 for use according to a specific application requirement.

In a specific application scenario, as shown in FIG. 1, an embodiment of the present application further provides an edible liquid container system, including an edible liquid container 100 and a base 200.

With reference to FIG. 2 and FIG. 19, the edible liquid container 100 includes the accommodation component 110, the supporting component 120, the first connector 130, the connection line 140, one or more first sealing rings 151, the second sealing ring 152, the temperature measurement module 160, and one or more suction modules 170. As shown in FIG. 3, the base 200 includes the outer shell 210, the weighing module 220, the second connector 230, the first weighing signal line 240, the second weighing signal line 250, the first signal transmission line 260, the first temperature signal line (not shown in the figure), and the second temperature signal line (not shown in the figure). As shown in FIG. 6, the weighing module 220 includes the weighing sensor 221, the upper support 222, and the lower support 223. The weighing sensor 221 is configured to obtain weight data. The upper support 222 is positioned between the outer shell 210 and the weighing sensor 221. The lower support 223 is disposed under the weighing sensor 221.

As shown in FIG. 9 and FIG. 10, the accommodation component 110 is configured to accommodate edible liquid; and a first convex portion 111 that protrudes downward is provided on a bottom portion of the accommodation component 110, and one or more first ring grooves 112 are provided on an outer wall of the first convex portion 111 in the circumferential direction.

As shown in FIG. 1, the supporting component 120 is positioned between the accommodation component 110 and the base 200. As shown in FIG. 11, a second convex portion 121 that protrudes upward is provided on the supporting component 120. With reference to FIG. 8 and FIG. 9, the second convex portion 121 forms first accommodation space 101, and the first accommodation space 101 surrounds the first convex portion 111 in the circumferential direction, so that at least a part of the first connector 130 is accommodated in the first accommodation space 101; and a first through hole 122 is provided inside the second convex portion 121, and the first through hole 122 corresponds to a position of the first connector 130, allowing the first connector 130 to be exposed through the first through hole 122, which facilitates the connection of the second connector 230 and the first connector 130, as shown in FIG. 11. As shown in FIG. 4, a limiting concave portion 123 that is opened downward is provided on a bottom portion of the supporting component 120, and a width of the limiting concave portion 123 increases gradually in a first direction; and one or more first fool-proofing structures 124 that are opened downward are further provided on the bottom portion of the supporting component 120.

As shown in FIG. 18, the temperature measurement module 160 is configured to obtain temperature data; and the temperature measurement module 160 includes a temperature sensor, and the temperature sensor has a first connection end (not shown in the figure) and a second connection end (not shown in the figure).

As shown in FIG. 18, the first connector 130 includes the first connection component 131, the second connection component 132, the fifth connection component 133, and the sixth connection component 134; and the fifth connection component 133 is connected to the first connection end of the temperature sensor, and the sixth connection component 134 is connected to the second connection end of the temperature sensor. As shown in FIG. 16, the connection line 140 is configured to connect the first connection component 131 to the second connection component 132.

With reference to FIG. 9 and FIG. 12, one or more first sealing rings 151 are disposed between the first convex portion 111 and the second convex portion 121, and the first sealing rings 151 are sleeved on the first ring grooves 112 in a one-to-one correspondence.

As shown in FIG. 2, the one or more suction modules 170 are configured to suction liquid from the accommodation component 110.

As shown in FIG. 17, the outer shell 210 is disposed between the supporting component 120 and the upper support 222, and the third through hole 211 corresponding to the position of the first through hole 122 is provided on the outer shell 210. With reference to FIG. 4 and FIG. 5, a limiting convex portion 212 that protrudes upward and that matches the limiting concave portion 123 is provided on the outer shell 210, and the edible liquid container 100 and the base 200 achieve a limiting connection through a cooperation between the limiting concave portion 123 and the limiting convex portion 212; and one or more second fool-proofing structures 213 that protrude upward and that match the first fool-proofing structures 124 are provided on the outer shell 210, the quantity of second fool-proofing structures 213 is the same as the quantity of first fool-proofing structures 124, and the edible liquid container 100 and the base 200 achieve a fool-proofing connection through a cooperation between the first fool-proofing structure 124 and the second fool-proofing structure 213.

With reference to FIG. 14, FIG. 15, and FIG. 17, a first recess 224 that is opened upward is provided on the upper support 222, the first recess 224 corresponds to the position of the first through hole 122, and the third through hole 211 and the first recess 224 are provided to form second accommodation space 201, so that at least a part of the second connector 230 is accommodated in the second accommodation space 201. A second through hole 225 corresponding to the position of the second connector 230 is provided inside the first recess 224, so that the second connector 230 extends downward and protrudes out of the second through hole 225 and is electrically connected to the second weighing signal line 250 and the first signal transmission line 260, as shown in FIG. 14.

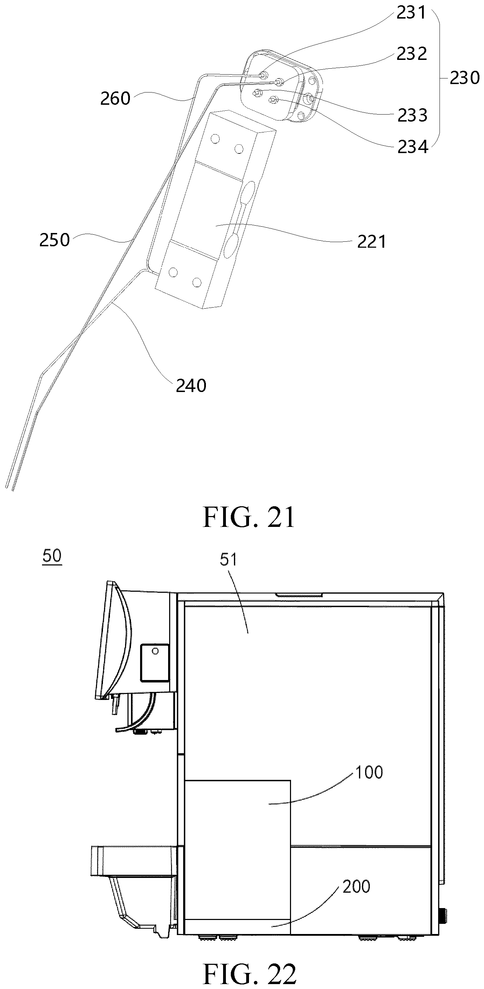

Refer to FIG. 21, FIG. 21 is a three-dimensional view of the weighing sensor 221, the second connector 230, the first weighing signal line 240, the second weighing signal line 250, and the first signal transmission line 260 according to an embodiment of the present application. As shown in FIG. 18, the second connector 230 includes the third connection component 231, the fourth connection component 232, the seventh connection component 233, and the eighth connection component 234. The first weighing signal line 240 is configured to connect the weighing sensor 221 and the external device (not shown in the figure). The first signal transmission line 260 is configured to connect the weighing sensor 221 and the third connection component 231. The second weighing signal line 250 is configured to connect the fourth connection component 232 and an external device. The first temperature signal line (not shown in the figure) is configured to connect the seventh connection component 233 and an external device. The second temperature signal line (not shown in the figure) is configured to connect the eighth connection component 234 and an external device.

With reference to FIG. 8, FIG. 18, and FIG. 21, after the edible liquid container 100 is placed on the base 200, the third connection component 231 and the first connection component 131 are electrically connected, the fourth connection component 232 and the second connection component 132 are electrically connected, the seventh connection component 233 and the fifth connection component 133 are electrically connected, and the eighth connection component 234 and the sixth connection component 134 are electrically connected, so that the first connector 130 and the second connector 230 are electrically connected to activate the first communication circuit between the weighing sensor 221 and the external device and activate the second communication circuit between the temperature measurement module 160 and the external device. The first communication circuit is configured to transmit weight data obtained by the weighing sensor 221 to the external device. The second communication circuit is configured to transmit temperature data obtained by the temperature measurement module 160 to the external device.

In some embodiments, a liquid meal maker is electrically connected to a plurality of edible liquid container systems, and the edible liquid container 100 in each edible liquid container system is configured to accommodate different types of edible liquid, such as milk, juice, soup, and alcohol. Each edible liquid container 100 may have a different color or another appearance design to reduce user errors in liquid pouring.

In an embodiment of the present application, a liquid meal maker is configured to make a liquid meal, and the liquid meal may be various types of edible drinks, such as coffee, milk tea, soup, alcohol, ice cream, etc.

Referring to FIG. 22, an embodiment of the present application further provides a liquid meal maker 50, and the liquid meal maker 50 includes one or more of the aforesaid edible liquid container systems.

The liquid meal maker is not restricted in the embodiments of the present application, and may be a coffee machine, an ice cream machine, a milk tea machine, or the like. The liquid meal maker 50 includes a main body 51. The one or more of the aforesaid edible liquid container systems may be disposed inside the main body 51, on a top portion of the main body 51, or on one side of the main body 51.

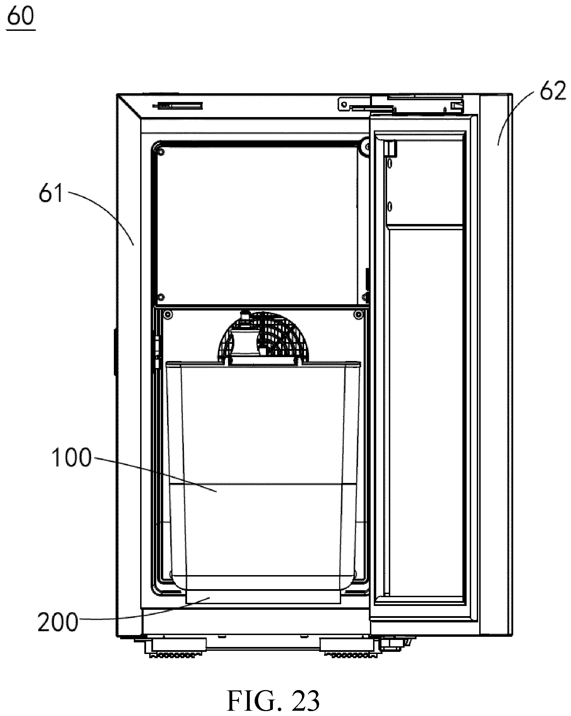

Referring to FIG. 23, an embodiment of the present application further provides a refrigeration device 60, and the refrigeration device 60 includes one or more of the aforesaid edible liquid container systems.

The refrigeration device is not restricted in the embodiments of the present application, and may be a refrigerator, a freezer, a cold storage structure, or the like. The refrigeration device 60 includes a body 61 and a door 62 movably connected to the body 61. An accommodation cavity is limited in the body 61. The door 62 is configured to open and close the accommodation cavity. The one or more of the aforesaid edible liquid container system may be disposed in the accommodation cavity.

It may be understood that the specific examples in this specification are only intended to help a person skilled in the art to better understand the implementations of the present application, and are not intended to limit the scope of the present invention.

It may be understood that, in various implementations of this specification, sequence numbers of the processes do not mean a sequence of performing the processes. The sequence of performing the processes should be determined based on functions and internal logic of the processes, and should not be construed as any limitation on the implementation processes of the present application.

It may be understood that various implementations described in this specification may be implemented either individually or in combination. This is not restricted in the present application.

Unless otherwise described, all technical and scientific terms used in this specification have the same meaning as would normally be understood by a person skilled in the art of this specification. The terms used in this specification are only for describing specific implementations, and are not intended to limit the scope of this specification. The term "and/or" used in this specification includes any and all combinations of one or more related listed items. The singular forms of "a" and "the" used in this specification and the appended claims are intended to include the plural forms as well, unless the context clearly indicates otherwise.

It may be clearly understood by a person skilled in the art that, for the purpose of convenient and brief description, for a detailed working process of each embodiment described above, refer to a corresponding process in another embodiment. Details are not described herein again.

In several embodiments provided in this specification, it should be understood that the disclosed system, apparatus, and method may be implemented in another manner. For example, the described apparatus embodiments are merely examples. For example, division of the units is merely logical function division and may be other division in actual implementation. For example, a plurality of units or components may be combined or integrated into another system, or some features may be omitted or not be performed. In addition, the displayed or discussed mutual couplings or direct couplings or communication connections may be implemented through some interfaces. The indirect couplings or communication connections between the apparatuses or units may be implemented in electrical, mechanical, or another form.

In addition, functional units in the implementations of this specification may be integrated into one processing unit, each of the units may exist alone physically, or two or more units are integrated into one unit.

The aforesaid descriptions are merely specific implementations of this specification, but are not intended to limit the protection scope of the present invention. Any variation or replacement readily figured out by a person skilled in the art within the technical scope disclosed in this specification shall fall within the protection scope of this specification. Therefore, the protection scope of the present invention shall be subject to the protection scope of the claims.

## Claims

**1.** An edible liquid container system, comprising an edible liquid container (100) and a base (200), wherein the edible liquid container (100) comprises an accommodation component (110) and a first limiting structure, and the accommodation component (110) is configured to accommodate edible liquid;
the base (200) comprises a weighing module (220) and a second limiting structure, and the weighing module (220) is configured to obtain weight data; and
the edible liquid container (100) and the base (200) achieve a limiting connection through a cooperation between the first limiting structure and the second limiting structure, and the limiting connection is configured to limit the edible liquid container (100) at a preset position on the base (200) and to allow the edible liquid container (100) and the base (200) to be out of contact.

**2.** The edible liquid container system according to claim 1, wherein the cooperation between the first limiting structure and the second limiting structure comprises one or more of a magnetic attraction, a snap-fit, and a hook and loop cooperation.

**3.** The edible liquid container system according to claim 1, wherein the edible liquid container (100) further comprises a supporting component (120), the supporting component (120) is disposed between the accommodation component (110) and the base (200), and the first limiting structure is provided at the bottom of the supporting component (120); and
the base (200) further comprises an outer shell (210), the outer shell (210) is disposed between the supporting component (120) and the weighing module (220), and the second limiting structure is provided at the top of the outer shell (210).

**4.** The edible liquid container system according to claim 3, wherein the first limiting structure comprises a limiting concave portion (123) that is opened downward; and
the second limiting structure comprises a limiting convex portion (212) that protrudes upward, and the limiting convex portion (212) is complementary to the limiting concave portion (123).

**5.** The edible liquid container system according to claim 4, wherein a width of the limiting concave portion (123) gradually increases along a first direction, and the edible liquid container (100) is placed at the preset position along the first direction.

**6.** The edible liquid container system according to claim 3, wherein one or more first fool-proofing structures (124) are provided at the bottom of the supporting component (120), one or more second fool-proofing structures (213) are provided on the outer shell (210), the first fool-proofing structures (124) correspond one-to-one with the second fool-proofing structures (213), and the edible liquid container (100) and the base (200) achieve a fool-proofing connection through a cooperation between the first fool-proofing structures (124) and the second fool-proofing structures (213).

**7.** The edible liquid container system according to any one of claims 3 to 6, wherein the edible liquid container (100) further comprises a first connector (130), the base (200) further comprises a second connector (230), the first connector (130) is configured to connect to the second connector (230) to activate a first communication circuit, and the first communication circuit is configured to transmit the weight data obtained by the weighing module (220).

**8.** The edible liquid container system according to claim 7, wherein the first connector (130) comprises a first connection component (131) and a second connection component (132), and the second connector (230) comprises a third connection component (231) and a fourth connection component (232);
the edible liquid container (100) further comprises a connection line (140), and the connection line (140) is configured to connect the first connection component (131) and the second connection component (132);
and the base (200) further comprises a first weighing signal line (240), a second weighing signal line (250), and a first signal transmission line (260), the first weighing signal line (240) is configured to connect the weighing module (220) and an external device, the first signal transmission line (260) is configured to connect the weighing module (220) and the third connection component (231), and the second weighing signal line (250) is configured to connect the fourth connection component (232) and the external device; and
with the third connection component (231) connected to the first connection component (131), and the fourth connection component (232) connected to the second connection component (132), the first communication circuit is activated.

**9.** The edible liquid container system according to claim 7, wherein a first convex portion (111) that protrudes downward is provided at the bottom of the accommodation component (110), a second convex portion (121) that protrudes upward is provided on the supporting component (120), the second convex portion (121) forms a first accommodation space (101), and the first accommodation space (101) surrounds the first convex portion (111) in a circumferential direction; and
at least a part of the first connector (130) is accommodated in the first accommodation space (101).

**10.** The edible liquid container system according to claim 9, wherein one or more first ring grooves (112) are provided on an outer wall of the first convex portion (111) in the circumferential direction; and
the edible liquid container (100) further comprises one or more first sealing rings (151), the first sealing rings (151) are disposed between the first convex portion (111) and the second convex portion (121), with each first sealing ring (151) being sleeved onto a corresponding first ring groove (112).

**11.** The edible liquid container system according to claim 9, wherein a first through hole (122) is provided inside the second convex portion (121), the first through hole (122) corresponds to a position of the first connector (130), a first recess (224) that is opened upward is provided on the weighing module (220), the first recess (224) corresponds to a position of the first through hole (122), and a third through hole (211) corresponding to the position of the first through hole (122) is provided on the outer shell (210); and
the third through hole (211) and the first recess (224) form a second accommodation space (201), at least a part of the second connector (230) is accommodated in the second accommodation space (201), a second through hole (225) is provided inside the first recess (224), and the second connector (230) extends downward and protrudes out of the second through hole (225). 12. The edible liquid container system according to claim 7, wherein the edible liquid container (100) further comprises a temperature measurement module (160), and the temperature measurement module (160) is configured to obtain temperature data; and
the first connector (130) is further configured to connect to the second connector (230) to activate a second communication circuit, and the second communication circuit is configured to transmit the temperature data. 13. The edible liquid container system according to claim 1, wherein the base (200) further comprises an outer shell (210), the weighing module (220) comprises a parallel beam weighing sensor, an upper support (222), and a lower support (223), the upper support (222) is disposed between the outer shell (210) and the parallel beam weighing sensor, and the lower support (223) is disposed under the parallel beam weighing sensor.

**14.** A refrigeration device, wherein the refrigeration device comprises one or more edible liquid container systems according to any one of claims 1 to 13.

**15.** A liquid meal maker, wherein the liquid meal maker comprises one or more edible liquid container systems according to any one of claims 1 to 13.

## Amended claims

### Amended claims in accordance with Rule 137(2) EPC.

1. An edible liquid container system, comprising an edible liquid container (100) and a base (200), wherein the edible liquid container (100) comprises an accommodation component (110) and a first limiting structure, and the accommodation component (110) is configured to accommodate edible liquid;
the base (200) comprises a weighing module (220) and a second limiting structure, and the weighing module (220) is configured to obtain weight data; and
the edible liquid container (100) and the base (200) implement a limiting connection through a cooperation between the first limiting structure and the second limiting structure, and the limiting connection is configured to limit the edible liquid container (100) at a preset position on the base (200) and to allow the edible liquid container (100) to be separable from the base (200); **characterized in that** the cooperation between the first limiting structure and the second limiting structure comprises one or more of a magnetic adsorption, a clamp cooperation, and a hook and loop cooperation.

2. The edible liquid container system according to claim 1, wherein the edible liquid container (100) further comprises a supporting component (120), the supporting component (120) is disposed between the accommodation component (110) and the base (200), and the first limiting structure is provided on a bottom portion of the supporting component (120); and
the base (200) further comprises an outer shell (210), the outer shell (210) is disposed between the supporting component (120) and the weighing module (220), and the second limiting structure is provided on a top portion of the outer shell (210).

3. The edible liquid container system according to claim 2, wherein the first limiting structure comprises a limiting concave portion (123) that is opened downward; and
the second limiting structure comprises a limiting convex portion (212) that protrudes upward, and the limiting convex portion (212) matches the limiting concave portion (123).

4. The edible liquid container system according to claim 3, wherein a width of the limiting concave portion (123) increases gradually in a first direction, and the edible liquid container (100) is placed at the preset position in the first direction.

5. The edible liquid container system according to claim 2, wherein one or more first fool-proofing structures (124) are provided on the bottom portion of the supporting component (120), one or more second fool-proofing structures (213) are provided on the outer shell (210), the first fool-proofing structures (124) match the second fool-proofing structures (213) in a one-to-one correspondence, and the edible liquid container (100) and the base (200) implement a fool-proofing connection through a cooperation between the first fool-proofing structures (124) and the second fool-proofing structures (213).

6. The edible liquid container system according to any one of claims 2 to 5, wherein the edible liquid container (100) further comprises a first connector (130), the base (200) further comprises a second connector (230), the first connector (130) is configured to connect to the second connector (230) to turn on a first communication circuit, and the first communication circuit is configured to transmit the weight data obtained by the weighing module (220).

7. The edible liquid container system according to claim 6, wherein the first connector (130) comprises a first connection component (131) and a second connection component (132), and the second connector (230) comprises a third connection component (231) and a fourth connection component (232);
the edible liquid container (100) further comprises a connection line (140), and the connection line (140) is configured to connect the first connection component (131) and the second connection component (132); and the base (200) further comprises a first weighing signal line (240), a second weighing signal line (250), and a first signal transmission line (260), the first weighing signal line (240) is configured to connect the weighing module (220) and an external device, the first signal transmission line (260) is configured to connect the weighing module (220) and the third connection component (231), and the second weighing signal line (250) is configured to connect the fourth connection component (232) and the external device; and
with the third connection component (231) and the first connection component (131) are connected, and the fourth connection component (232) and the second connection component (132) are connected, the first communication circuit is turned on.

8. The edible liquid container system according to claim 6, wherein a first convex portion (111) that protrudes downward is provided on a bottom portion of the accommodation component (110), a second convex portion (121) that protrudes upward is provided on the supporting component (120), the second convex portion (121) forms first accommodation space (101), and the first accommodation space (101) surrounds the first convex portion (111) in a circumferential direction; and
at least a part of the first connector (130) is accommodated in the first accommodation space (101).

9. The edible liquid container system according to claim 8, wherein one or more first ring grooves (112) are provided on an outer wall of the first convex portion (111) in the circumferential direction; and
the edible liquid container (100) further comprises one or more first sealing rings (151), the first sealing rings (151) are disposed between the first convex portion (111) and the second convex portion (121), and the first sealing rings (151) are sleeved on the first ring grooves (112) in a one-to-one correspondence.

10. The edible liquid container system according to claim 8, wherein a first through hole (122) is provided inside the second convex portion (121), the first through hole (122) corresponds to a position of the first connector (130), a first recess (224) that is opened upward is provided on the weighing module (220), the first recess (224) corresponds to a position of the first through hole (122), and a third through hole (211) corresponding to the position of the first through hole (122) is provided on the outer shell (210); and
the third through hole (211) and the first recess (224) form second accommodation space (201), at least a part of the second connector (230) is accommodated in the second accommodation space (201), a second through hole (225) is provided inside the first recess (224), and the second connector (230) extends downward and out of the second through hole (225).

11. The edible liquid container system according to claim 6, wherein the edible liquid container (100) further comprises a temperature measurement module (160), and the temperature measurement module (160) is configured to obtain temperature data; and
the first connector (130) is further configured to connect to the second connector (230) to turn on a second communication circuit, and the second communication circuit is configured to transmit the temperature data.

12. The edible liquid container system according to claim 1, wherein the base further comprises an outer shell (210), the weighing module (220) comprises a parallel beam weighing sensor, an upper support (222), and a lower support (223), the upper support (222) is disposed between the outer shell (210) and the parallel beam weighing sensor, and the lower support (223) is disposed under the parallel beam weighing sensor.

13. A refrigeration device, wherein the refrigeration device comprises one or more of the edible liquid container system according to any one of claims 1 to 12.

14. A liquid meal maker, wherein the liquid meal maker comprises one or more of the edible liquid container system according to any one of claims 1 to 12.
